(19) Europäisches Patentamt
European Patent Office
Office européen des brevets

(11) **EP 4 650 377 A1**

(12) **EUROPEAN PATENT APPLICATION**

(43) Date of publication:
**19.11.2025   Bulletin 2025/47**

(21) Application number: **24175449.8**

(22) Date of filing: **13.05.2024**

(51) International Patent Classification (IPC):
*C08F 110/02* (2006.01)    *C08F 210/16* (2006.01)
*C08F 2/00* (2006.01)    *C08L 23/06* (2006.01)
*C08L 23/08* (2025.01)    *C08J 5/18* (2006.01)

(52) Cooperative Patent Classification (CPC):
(C-Sets available)
**C08J 5/18; C08L 23/06; C08L 23/0815**    (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Borealis GmbH**
**1020 Vienna (AT)**

(72) Inventor: **BURYAK, Andrey**
**1020 Wien (AT)**

(74) Representative: **TBK**
**Bavariaring 4-6**
**80336 München (DE)**

(54) **MULTIMODAL ETHYLENE COPOLYMER COMPOSITION WITH MEDIUM DENSITY AND FILM WITH IMPROVED TOUGHNESS**

(57)    The present invention provides a multimodal ethylene copolymer composition made of a copolymer of ethylene and at least two $\alpha$-olefin comonomers having 3 to 10 carbon atoms, wherein the composition comprises at least low and high molecular weight polymer fractions and having specified properties in terms of molecular weight, molecular weight distribution, density, and melt flow properties in terms of $MFR_2$, $MFR_5$, and $MFR_{21}$, and a film made therefrom, which provides improved mechanical characteristics especially in terms of dart drop impact strength and tensile modulus.

EP 4 650 377 A1

(52) Cooperative Patent Classification (CPC): (Cont.)

C-Sets
**C08F 210/16, C08F 2/001;**
**C08F 210/16, C08F 4/64;**
**C08F 210/16, C08F 4/6492;**
C08F 110/02, C08F 2500/12;
C08F 210/16, C08F 210/14, C08F 210/08,
C08F 2500/12;
C08F 210/16, C08F 210/14, C08F 210/08,
C08F 2500/12, C08F 2500/27;
C08F 210/16, C08F 210/14, C08F 210/08,
C08F 2500/12, C08F 2500/27, C08F 2500/26

**Description**

**Field of the invention**

The present invention relates to a multimodal ethylene copolymer composition (MEC) comprising a copolymer of ethylene and at least two $\alpha$-olefin comonomers having 3 to 10 carbon atoms (CEA), wherein the composition comprises at least low and high molecular weight polymer fractions and having specified properties in terms of molecular weight, molecular weight distribution, density, and melt flow properties in terms of $MFR_2$, $MFR_5$, and $MFR_{21}$, and a film comprising the MEC as well as a multilayer film in which at least one of the layers comprises the MEC.

**Technical background**

Due to its numerous good properties, polyethylene (PE) has become one of the most widespread plastics and is widely used everywhere. Due to the wide range of applications, constantly increasing demands are placed on the material, resulting in a constant improvement and expansion of the property profile. Polyethylene polymers are used in a variety of applications. In particular, films for e.g. packaging applications are a highly relevant market.

Polyethylene can be classified into different grades such as low density polyethylene (LDPE), medium density polyethylene (MDPE), high density polyethylene (HDPE), and linear low density polyethylene (LLDPE) according to especially density, copolymerization, and kinds of branch, each of the respective polyethylene products having individual characteristics for desired applications.

In order to improve film properties, investigations in the prior art were made to provide various polyethylene polymer compositions of different grades for film applications or films were made of multiple layers in order to provide suitable properties.

WO2020/136164 A1 relates to process for producing a multimodal ethylene polymer composition suitable for producing films by blow molding. The Examples concern polyethylene compositions with low density and the molecular weight and molecular weight distribution properties are not described.

WO2020/136166 A1 relates to a multilayer film comprising a core layer and two outer layers exemplary using commercial products for the individual layers.

WO2022/258804 A1 relates to a process for producing a multimodal ethylene polymer to produce a second ethylene polymer mixture comprising a first ethylene polymer mixture and a third ethylene copolymer and the exemplary multimodal ethylene polymer have an $MFR_5$ and/or $MFR_{21}$ values higher than that of the present invention.

EP1333044 A1 relates to a film consisting of a bimodal terpolymer having low density and comprising a low molecular weight homopolymer of ethylene and a high molecular weight terpolymer of ethylene, 1-butene and a C6 to C12 $\alpha$-olefin, or a bimodal terpolymer comprising a low molecular weight polymer which is a binary copolymer of ethylene and a C4 to C12 $\alpha$-olefin and a high molecular weight polymer which is either a binary copolymer of ethylene and 1-butene, if the low molecular weight polymer is a binary copolymer of ethylene and a C6 to C12 $\alpha$-olefin, or a terpolymer of ethylene, 1-butene and a C6 to C12 $\alpha$-olefin.

EP3141566 A1 relates to an ethylene-1-hexene-1-butene terpolymer and a film including the same, wherein the ethylene-1-hexene-1-butene terpolymer has a low density and a rather high melt index and includes 1-hexene and 1-butene as comonomers.

EP4344869 A1 relates to a multimodal ethylene copolymer composition with low density and comprising 5 to 25 wt.-%, relative to the total weight of the multimodal ethylene copolymer composition, of a first ethylene copolymer (A1) comprising a copolymer of ethylene and at least a first $\alpha$-olefin comonomer, 15 to 35 wt.-%, relative to the total weight of the multimodal ethylene copolymer composition, of a second ethylene copolymer (A2) comprising a copolymer of ethylene and at least the first $\alpha$-olefin comonomer, and 40 to 80 wt.-%, relative to the total weight of the multimodal ethylene copolymer composition, of a third ethylene copolymer (B) comprising a copolymer of ethylene and at least the first and a second $\alpha$-olefin comonomer.

In order to protect the content of a package, it is desired that the films have good or even excellent mechanical properties, such as a high tensile modulus and/or high impact resistance. Excellent mechanical properties also allow to produce thinner films, which reduces the amount of the polymer used to obtain the film. While certain polyethylene grades excel in certain properties, this is often associated with disadvantages of other properties.

Polyethylene polymer compositions of medium density are a potentially attractive target to combine suitable characteristics of higher and lower density grades. Further considering the perspective to using polyethylene polymer compositions to boost the often diminished properties of post-consumer recyclate (PCR) polymers by blending, it is desired to have a material with well-balanced properties that helps to scope with reducing the environmental impact by recycling. It is also desired to have a polyethylene polymer composition which can achieve desired properties alone without the need for adopting more advance multilayer structures.

Therefore, there is the need to develop polyethylene polymer compositions with medium density which are recyclable and have higher impact resistance, while keeping or even improving tensile modulus and other properties such as haze value of films or multilayer made of such polymer compositions.

## Summary of the invention

It is the object of the present invention to provide a polyethylene polymer composition with medium density and balanced properties, that is recyclable, showing improved mechanical properties of the material, especially in terms of improved dart drop impact strength, while keeping or even improving other mechanical properties such as tensile modulus and other properties such as haze value as well as a film or multilayer film comprising the polyethylene composition.

The inventors of the present invention surprisingly found that the object can be solved by providing a multimodal ethylene copolymer composition (MEC) made of a copolymer of ethylene and at least two $\alpha$-olefin comonomers having 3 to 10 carbon atoms (CEA), wherein the copolymer (CEA) comprises low and high molecular weight polymer fractions with the high molecular weight polymer fraction being enriched in comonomer content, wherein the composition (MEC) has a number average molecular weight Mn, determined by GPC according to the method described herein, in the range of 7500 to 15 000 g/mol, a weight average molecular weight Mw, determined by GPC according to the method described herein, in the range of 180 000 to 325 000 g/mol, an Mw/Mn in the range of 20.0 to 30.0, a density, according to ISO1183-187, of 937.0 to 943.0 kg/m$^3$, an MFR$_2$, according to ISO 1133 at 190°C and 2.16 kg load, of 0.01 to 0.40 g/10min, an MFR$_5$, according to ISO 1133 at 190°C and 5 kg load, of 0.10 to 0.70 g/10min, and an MFR$_{21}$, according to ISO 1133 at 190°C and 21.6 kg load, of 3.00 to 20.00 g/10min.

By means of the above-identified configuration, in particular the tailored combination of low and high molecular weight polymer fractions with a specific final molecular weight profile in terms of Mn, Mw, and Mw/Mn (molecular weight distribution) and melt flow characteristic in terms of low MFR$_2$, MFR$_5$ and MFR$_{21}$ values at given set medium density, which can advantageously be polymerized as a reactor blend in a three-stage polymerization process such as the Borstar® technology, a multimodal ethylene copolymer composition (MEC) can be provided that achieves the surprising technical effects of increasing the dart drop impact strength (toughness) of a film while maintaining or even improving other mechanical properties such as the tensile properties (stiffness) while other properties such as haze remain within suitably applicate ranges or are even improved.

The present invention further relates to a film, which comprises, preferably consists of, the multimodal ethylene copolymer composition and to a multilayer film, in which at least one of the layers comprises, preferably consists of, the multimodal ethylene copolymer composition.

Preferred embodiments of the invention are depicted in the dependent claims and a detailed description of the invention is provide in the following description.

## Detailed Description

The term "comprising" (as well as terms "containing", "including" or "having") as used in the present invention does not exclude other components. For the purposes of the present invention, the term "consisting of" is considered to be a preferred embodiment of the term "comprising of" (as well as terms "containing", "including" or "having) unless specifically defined otherwise. Likewise, if hereinafter a group is defined to comprise at least a certain number of embodiments, this is also to be understood to disclose a group, which preferably consists only of these embodiments, unless specifically defined otherwise. Further, unless explicitly described otherwise, the description of the present invention is to be understood so that one or more of any of the described preferred embodiments of the invention can be combined with the invention described in its most general features.

Further, where an indefinite or definite article is used when referring to a singular noun, e.g. "a", "an" or "the", this includes a plural of that noun unless something else is specifically stated.

In the following amounts are given in % by weight (wt.-%) unless it is stated otherwise.

When reference is made to a method or step or stage or reactor or apparatus (or similar) "for" producing or forming a certain material (e.g. polymer fraction) or "for" performing a certain action, this shall be understood that this step (or stage or reactor, etc.) is adapted to (configured to) produce (or form) that certain material or to perform this certain action.

## Multimodal ethylene copolymer composition (MEC)

The multimodal ethylene copolymer composition (MEC) of the present invention comprises a copolymer of ethylene and at least two $\alpha$-olefin comonomers having 3 to 10 carbon atoms (CEA), wherein the copolymer (CEA) comprises low and high molecular weight polymer fractions with the high molecular weight polymer fraction being enriched in comonomer content and whereby the composition (MEC) has:

a number average molecular weight Mn, determined by GPC according to the method described herein, in the range of 7500 to 15 000 g/mol,
a weight average molecular weight Mw, determined by GPC according to the method described herein, in the range of 180 000 to 325 000 g/mol,
an Mw/Mn in the range of 20.0 to 30.0,
a density, according to ISO1183-187, of 937.0 to 943.0 kg/m$^3$,
an $MFR_2$, according to ISO 1133 at 190°C and 2.16 kg load, of 0.01 to 0.40 g/10min,
an $MFR_5$, according to ISO 1133 at 190°C and 5 kg load, of 0.10 to 0.70 g/10min, and
an $MFR_{21}$, according to ISO 1133 at 190°C and 21.6 kg load, of 3.00 to 20.00 g/10min.

That is, the multimodal ethylene copolymer composition (MEC) in accordance with the present invention comprises the copolymer of ethylene and at least two α-olefin comonomers having 3 to 10 carbon atoms (CEA) and may further contain other components such as additive(s). The requirement applies that the CEA and the other components, as far as being present, add up to 100 wt.-%, provided that the amount of the copolymer of ethylene and at least two α-olefin comonomers having 3 to 10 carbon atoms accounts for at least 94.000 wt.-% of the MEC. Preferably, the multimodal ethylene copolymer composition (MEC) of the present invention comprises, based on the total weight of the MEC, 94.000 to 99.999 wt.-%, more preferably 96.000 to 99.990 wt.-%, even more preferably 97.000 to 99.950 wt.-%, most preferably 97.500 to 99.900 wt.-%, of the CEA, thereby significantly facilitating the recycling of articles formed of the composition. It is to be understood that if various ranges are indicated, the lower and upper limit(s) of the various ranges can be suitable combined to form another range and this general principle applies throughout the entire application. Further, as apparent from the word "multimodal ethylene copolymer composition (MEC) comprising a copolymer of ethylene and at least two α-olefin comonomers having 3 to 10 carbon atoms (CEA)", the present invention does not aim at a composition of different polymers. Accordingly, the ethylene copolymer composition (MEC) comprises other components such as additives, but preferably no other polymer components than the copolymer of ethylene and at least two α-olefin comonomers having 3 to 10 carbon atoms (CEA), except for optional polymeric nucleating agent(s) and/or carrier polymers of a masterbatch for adding other component(s) such as additive(s). The present invention can achieve the herein described envisaged beneficial technical effects by providing the multimodal ethylene copolymer composition (MEC) which essentially consists of the reactor thermoplastic polyolefin (MEC).

Preferably, the MEC comprises, based on the total weight of the MEC, up to 6 wt.-%, preferably 0.01 to 3.5 wt.-%, more preferably 0.025 to 2.5 wt.-%, even more preferably 0.05 to 1.5 wt.-%, most preferably 0.075 to 0.75 wt.-%, additive(s), said additive(s) being preferably selected from the group consisting of antioxidants, acid scavenges, UV-stabilizers, antistatic agents, and slip agents and mixtures thereof. Notably, it is possible that two or more functions can be combined in the same molecule and such a constitution may be preferred to reduce the overall amount of additives. The additive(s) may be added to the composition in pure form or in the form of a masterbatch in a carrier resin. Where applicable and appropriate, the additive(s) may already be added during the polymerization of the CEA. Preferably, at least antioxidant(s), more preferably at least antioxidant(s) and acid scavenger(s), are present as additive(s). Such additives are well known in the art and ensure favorable stability and/or performance of the polyethylene composition in its designated application.

A skilled person and the present invention appreciates modifications e.g. in that the MEC comprises optional component(s) other than the above additive(s), such as nucleating agents, utilization agents, polymer additives, fillers, coloring agents, anti-block agents, processing aids, and modifiers commonly known in the art, as long as the claimed requirements of the MEC are satisfied. Thus, care must be taken not to add any optional component(s), which interfere with attaining the claimed properties of the MEC. In any case, the MEC preferably does not contain other polymer components than the copolymer of ethylene and at least two α-olefin comonomers having 3 to 10 carbon atoms (CEA) (except for optional carrier polymer of a masterbatch and/or polymeric nucleating agent). That is, in the context of the present invention, a skilled person appreciates that e.g. the optional additive(s) or other component(s) can be added to the MEC in a polymer component in the form of a masterbatch (also referred to as carrier polymer of the masterbatch). The amount of such masterbatch carrier polymer, if used, usually does not exceed 4 wt.-%, preferably is used in an amount of 3 wt.-% or less or 1 wt.-% or less, based on the total weight of the MEC.

The multimodal ethylene copolymer composition (MEC) of the present invention is characterized in having:

a number average molecular weight Mn, determined by GPC according to the method described herein, in the range of 7500 to 15 000 g/mol,
a weight average molecular weight Mw, determined by GPC according to the method described herein, in the range of 180 000 to 325 000 g/mol,
an Mw/Mn in the range of 20.0 to 30.0,
a density, according to ISO1183-187, of 937.0 to 943.0 kg/m$^3$,
an $MFR_2$, according to ISO 1133 at 190°C and 2.16 kg load, of 0.01 to 0.40 g/10min,

an MFR$_5$, according to ISO 1133 at 190°C and 5 kg load, of 0.10 to 0.70 g/10min, and

an MFR$_{21}$, according to ISO 1133 at 190°C and 21.6 kg load, of 3.00 to 20.00 g/10min. Due to this configuration, in particular the specific molecular weight profile in terms of Mn, Mw, and Mw/Mn (molecular weight distribution) and melt flow characteristic in terms of low MFR$_2$, MFR$_5$ and MFR$_{21}$ values at given set medium density, the multimodal ethylene copolymer composition (MEC) can achieve the surprising technical effects of increasing the dart drop impact strength (toughness) of a film while maintaining or even improving other mechanical properties such as the tensile properties (stiffness) while other properties such as the haze remain within suitably applicate ranges or are even improved.

Preferably, the multimodal ethylene copolymer composition (MEC) of the present invention has a density, according to ISO1183-187, of 937.5 to 941.0 kg/m$^3$, more preferably 938.0 to 940.5 kg/m$^3$. In this case, due to a suitable and favorable adjusted set medium density, the effects of the present invention are more pronounced and/or their achievement is facilitated.

Preferably, the multimodal ethylene copolymer composition (MEC) of the present invention has a number average molecular weight Mn, determined by GPC according to the method described herein, in the range of 8000 to 12 500 g/mol, more preferably 8500 to 11 500 g/mol. In this case, due to a suitable and favorable adjusted Mn, the effects of the present invention are more pronounced and/or their achievement is facilitated.

Preferably, the multimodal ethylene copolymer composition (MEC) of the present invention has a weight average molecular weight Mw, determined by GPC according to the method described herein, in the range of 185 000 to 310 000 g/mol, preferably more 190 000 to 290 000 g/mol. In this case, due to a suitable and favorable adjusted Mw, the effects of the present invention are more pronounced and/or their achievement is facilitated.

Preferably, the multimodal ethylene copolymer composition (MEC) of the present invention has an Mw/Mn ratio in the range of 20.5 to 28.0, more preferably 21.0 to 27.0. In this case, due to a suitable and favorable adjusted Mw/Mn ratio (molecular weight distribution), the effects of the present invention are more pronounced and/or their achievement is facilitated.

Preferably, the multimodal ethylene copolymer composition (MEC) of the present invention has a z-average molecular weight Mz, determined by GPC according to the method described herein, in the range of 840 000 to 1 550 000, more preferably 850 000 to 1 500 000, most preferably 900 000 to 1 400 000. In this case, due to a suitable and favorable adjusted Mz, the effects of the present invention are more pronounced and/or their achievement is facilitated.

Preferably, the multimodal ethylene copolymer composition (MEC) of the present invention has an Mz/Mw ratio in the range of 4.5 to 5.5, more preferably 4.6 to 5.2, most preferably 4.7 to 5.1. In this case, due to a suitable and favorable adjusted Mz/Mw ratio, the effects of the present invention are more pronounced and/or their achievement is facilitated.

That is, the multimodal ethylene copolymer composition (MEC) of the present invention comprises a copolymer of ethylene and at least two α-olefin comonomers having 3 to 10 carbon atoms (CEA), wherein the specific final molecular weight profile in terms of at least Mn, Mw, and Mw/Mn (molecular weight distribution) and preferably Mz and Mz/Mw ratio is attained by a combination of low and high molecular weight polymer fractions. That means that the copolymer has a multimodal molecular weight distribution derived from polymer fractions having different, i.e. low and high, molecular weight. Thus, the expression of multimodality refers to the form of its molecular weight distribution (MWD) curve, i.e. the appearance of the graph of the polymer weight fraction as a function of its molecular weight. If the copolymer is produced in a sequential step process i.e. by utilizing reactors coupled in series (in-reactor blend) and using different conditions in each reactor, the different polymer fractions produced in the different reactors will each have their own molecular weight distribution which may considerably differ from each another. The molecular weight distribution curve of the resulting final copolymer can be looked at as the superposition of the molecular weight distribution curve of the polymer fractions which will accordingly show two or more distinct maxima or at least be distinctly broadened compared with the curves of the individual fractions. A copolymer showing such a molecular weight distribution curve is called multimodal.

In the present invention, the above described specific final molecular weight profile of the MEC in terms of Mn, Mw, and Mw/Mn (molecular weight distribution) is adjusted in combination with specific melt flow characteristic in terms of low MFR$_2$, MFR$_5$ and MFR$_{21}$ values at given set medium density.

Preferably, the multimodal ethylene copolymer composition (MEC) of the present invention has an MFR$_2$, according to ISO 1133 at 190°C and 2.16 kg load, of 0.03 to 0.30 g/10min, more preferably 0.05 to 0.20 g/10min. In this case, due to a suitable and favorable adjusted MFR$_2$, the effects of the present invention are more pronounced and/or their achievement is facilitated.

Preferably, the multimodal ethylene copolymer composition (MEC) of the present invention has an MFR$_5$, according to ISO 1133 at 190°C and 5 kg load, of 0.15 to 0.65 g/10min, more preferably 0.18 to 0.60 g/10min, most preferably 0.18 to 0.45 g/10min. In this case, due to a suitable and favorable adjusted MFR$_5$, the effects of the present invention are more pronounced and/or their achievement is facilitated.

Preferably, the multimodal ethylene copolymer composition (MEC) of the present invention has an MFR$_{21}$, according to ISO 1133 at 190°C and 21.6 kg load, of 4.0 to 18.0 g/10min, more preferably 4.5 to 16.0 g/10min, most preferably 4.5 to 12.5 g/10min. In this case, due to a suitable and favorable adjusted $MFR_{21}$, the effects of the present invention are more pronounced and/or their achievement is facilitated.

By adjusting the preferred to most preferred low $MFR_{2/5/21}$ characteristics at given set medium density, it is possible to improve the dart drop impact strength (toughness) and the tensile properties in MD and TD (stiffness) at the same time.

Needless to say that each of the above described properties of the MEC (e.g. Mn, Mw, Mw/Mn, Mz, Mz/Mw, $MFR_2$, $MFR_5$ and $MFR_{21}$) as described herein may preferably be individually adjusted into a preferred or more preferred range, while it is even more preferred that two or more, most preferably all, of the above properties are adjusted into preferred and/or even more preferred ranges in combination. This principle generally applies throughout the entire application to other mentioned properties in connection with (preferred) quantifications.

Accordingly, the present invention is able to provide a multimodal ethylene copolymer composition (MEC) that preferably has a Dart Drop Impact (DDI), determined on a 40 $\mu$m blown film according to ASTM1709-16a, of 200 g or more, more preferably 200 to 400 g or 240 to 400 g. In this case, the present invention achieves favorable impact strength properties in film applications and can thus be used in applications requiring a certain toughness behavior.

Accordingly, the present invention is able to provide a multimodal ethylene copolymer composition (MEC) that preferably has a Tensile Modulus (TM) in machine direction (MD), determined on a 40 $\mu$m blown film according to ISO 527-3, of 350 MPa or more, more preferably of 350 to 750 MPa or 450 to 750 MPa. In this case, the present invention achieves favorable stiffness/bending properties and can thus be used in applications requiring a certain stiffness behavior.

Accordingly, the present invention is able to provide a multimodal ethylene copolymer composition (MEC) that preferably has a Tensile Modulus (TM) in traverse direction (TD), determined on a 40 $\mu$m blown film according to ISO 527-3, of 600 MPa or more, more preferably 600 to 1500 MPa or 750 to 1250 MPa. In this case, the present invention achieves favorable stiffness/bending properties and can thus be used in applications requiring a certain stiffness behavior.

Accordingly, the present invention is able to provide a multimodal ethylene copolymer composition (MEC) that preferably has a haze, determined on a 40 $\mu$m blown film according to ASTM D1003, of 95% or less, more preferably 50 to 95% or 55 to 92%. In this case, the present invention achieves favorable appearance properties and can thus be used in applications requiring a certain optical appearance.

As noted above, each of the above described properties of the MEC composition (e.g. DDI, TM TD, TM MD, and haze) as described herein may preferably be individually adjusted into a preferred or more preferred range, while it is even more preferred that two or more, most preferably all, of the above properties are adjusted into preferred and/or even more preferred ranges in combination. Again, this principle generally applies throughout the entire application to other mentioned properties in connection with (preferred) quantifications.

In the present invention, as stated above, the multimodal ethylene copolymer composition (MEC) comprises a copolymer of ethylene and at least two $\alpha$-olefin comonomers having 3 to 10 carbon atoms (CEA), wherein the CEA comprises low and high molecular weight polymer fractions with the high molecular weight polymer fraction being enriched in comonomer content. That means that the CEA has at least two polymer fractions and that the high molecular weight polymer fraction has a comonomer content that is higher than that of the low molecular weight polymer fraction.

Preferably, the copolymer of ethylene and at least two $\alpha$-olefin comonomers having 3 to 10 carbon atoms (CEA) comprises, or more preferably consists of, based on the total weight of the CEA:

30.0 to 60.0 wt.-%, preferably 35.0 to 55.0 wt.-%, more preferably 40.0 to 50.0 wt.-%, of an ethylene polymer fraction (A), which is a low molecular weight fraction having an $MFR_2$, according to ISO 1133 at 190°C and 2.16 kg load, of 100 to 500 g/10min or 200 to 400 g/10min, and

40.0 to 70.0 wt.-%, preferably 45.0 to 65.0 wt.-%, more preferably 50.0 to 60.0 wt.-%, of an ethylene copolymer fraction (B), which is a high molecular weight fraction having an $MFR_2$, according to ISO 1133 at 190°C and 2.16 kg load, of 0.010 g/10min or less. In this case, due to using such a polymer set up, the effects of the present invention are more pronounced and/or their achievement is facilitated.

Preferably, the ethylene polymer fraction (A) comprises, more preferably consists of, a first ethylene polymer fraction (A-1), optionally including a prepolymer fraction (A-P), and a second ethylene polymer fraction (A-2), the fractions (A-1) and (A-2) each having an $MFR_2$, according to ISO 1133 at 190°C and 2.16 kg load, of 100 to 500 g/10min, preferably 200 to 400 g/10min, such that a ratio of the MFR2 of fraction (A-1) to the $MFR_2$ of fraction (A-1) ($MFR2(A-1)/MFR_2(A-2)$) is 0.5 to 2, preferably 0.75 to 1.5, and wherein the amount of the first ethylene polymer fraction (A-1), optionally including a prepolymer fraction (A-P), is 12.0 to 30.0 wt.-%, preferably 13.0 to 26.0 wt.-%, more preferably 15.0 to 25.0 wt.-%, based on the total weight of the CEA, and the amount of the second ethylene polymer fraction (A-2) is 15.0 to 35.0 wt.-%, preferably 18.0 to 31.0 wt.-%, more preferably 20.0 to 30.0 wt.-%, based on the total weight of the CEA. In this case, due to using such a more specific polymer set up, the effects of the present invention are more pronounced and/or their achievement is facilitated. More particularly, by providing a first ethylene polymer fraction (A-1) and a second ethylene polymer fraction (A-2) as low molecular weight fractions, wherein the fractions (A-1) and (A-2) each having an $MFR_2$, according to ISO 1133 at 190°C and 2.16 kg load, of 100 to 500 g/10min, preferably 200 to 400 g/10min, such that a ratio of the MFR2 of fraction (A-1) to the $MFR_2$ of fraction (A-1) ($MFR2(A-1)/MFR_2(A-2)$) is 0.5 to 2, preferably 0.75 to 1.5, even if the $MFR_2$ of fractions (A-1) and (A-2) are almost identical, the homogeneity and processability of the final polymer is improved as compared to providing only one low molecular weight fraction.

It should be noted that in the present invention, a prepolymerization is not considered to represent a main polymerization step of its own and the amount of a prepolymer fraction (e.g. fraction (A-P)) produced in a prepolymerization step is counted to the amount (wt.-%) of the polymer fraction produced in the first main polymerization reactor (e.g. fraction (A) or (A-1)). Likewise, when determining the split, MFR, density, comonomer content etc. of the first polymer fraction (e.g. fraction (A) or (A-1)), the prepolymer fraction (A-P) is regarded as a part of the first polymer fraction (e.g. fraction (A) or (A-1)). The purpose of the prepolymerization is to polymerize a small amount of polymer onto the catalyst at a low temperature and/or a low monomer concentration, so that is it possible to improve the performance of the catalyst. The prepolymerization step may be conducted in slurry. It is understood that the amount of prepolymer fraction produced in the prepolymerization may be within 0.5 to 5.0 wt.-%, preferably 1.0 to 2.5 wt.-%, in respect to the total weight of the CEA. In the present invention, the prepolymer fraction (A-P) may be a polymer of ethylene and an α-olefin comonomer(s) having 3 to 10 carbon atoms, preferably 4 to 8 carbon atoms or 4 carbon atoms such as 1-butene and/or 1-hexene.

In the present invention, the ethylene polymer fraction (A) and the ethylene polymer fractions (A-1) and (A-2), respectively, may be an ethylene homopolymer fraction or may be an ethylene copolymer fraction which is formed predominantly of ethylene and may contain α-olefin comonomer(s) having 3 to 10 carbon atoms, preferably 4 to 8 carbon atoms or 4 carbon atoms such as 1-butene and/or 1-hexene. In particular, the ethylene polymer fraction (A) refers to a polyethylene polymer fraction containing less amount of comonomer as compared to the high molecular weight fraction, i.e. ethylene copolymer fraction (B), and the ethylene copolymer fraction (A) may contain at least 98.0 mol%, preferably at least 99.0 mol%, more preferably at least 99.5 mol% of ethylene units (e.g. determined by quantitative $^{13}$C NMR spectroscopy). Further, the ethylene copolymer fractions (A, A-1, A-2) may (each) be a polyethylene homopolymer fraction in which preferably only ethylene units are detectable (e.g. determined with $^{13}$C NMR spectroscopy). However, a skilled person and the present invention appreciates that production methods commonly employed in the art may result in contamination with comonomers, especially in case a prepolymerization step using comonomer(s) is applied. In the present invention, the term ethylene homopolymer fraction in the context of the ethylene polymer fractions (A), (A-1) and (A-2), respectively, is intended to refer to the constitution of the respective main polymerization fraction excluding the optional prepolymer fraction. That means that for instance the first ethylene main polymer fraction (A-1) may be produced by supply of only ethylene units to give an ethylene homopolymer fraction, while the prepolymer may be produced using ethylene and comonomer(s) as described above. In this case, since the comonomer of the prepolymer fraction (A-P), if present, is, according to the above definition, accounted to the first ethylene polymer fraction (A-1), the polymer fraction (A-1) is classified as homopolymer since the main polymer fraction constituting the polymer fraction (A-1) is a homopolymer, whereas the comonomer is present (only) in the prepolymer fraction (A-P). Even though it is usually desired to keep contaminations at a low level (i.e. in trace amounts), the homopolymer may therefore contain certain amounts of contaminate comonomers as e.g. derived from prepolymerization. As such, the term homopolymer, as used herein, therefore refers to a polyethylene polymer containing at least 99.0 mol%, preferably at least 99.8 mol%, more preferably at least 99.9 mol%, or even 100 mol% of ethylene units (e.g. determined by quantitative $^{13}$C NMR spectroscopy), as long as the claimed requirements of the CEA as well as that of the polyethylene composition (MEC) are satisfied.

In the present invention, the ethylene polymer fraction (A) comprises, preferably consists of, a first ethylene homopolymer fraction (A-1), including a prepolymer fraction (A-P) made of ethylene and α-olefin comonomer(s) such as 1-butene and/or 1-hexene, and a second ethylene homopolymer fraction (A-2). In this case, due to using such a more specific polymer set up, the effects of the present invention are more pronounced and/or their achievement is facilitated.

Preferably, the ethylene copolymer fraction (B) is a copolymer of ethylene and at least two α-olefin comonomers having 3 to 10 carbon atoms, preferably 4 to 8 carbon atoms, more preferably at least 1-butene and 1-hexene, the ethylene copolymer fraction (B) more preferably being a terpolymer of ethylene, 1-butene and 1-hexene. It should be noted that the comonomer content of this high molecular weight fraction is higher than that of the low molecular weight fraction (A). In this case, due to using such a more specific polymer set up, the effects of the present invention are more pronounced and/or their achievement is facilitated.

Preferably, an overall comonomer content of α-olefin comonomers having 3 to 10 carbon atoms, preferably 4 to 8 carbon atoms, more preferably at least 1-butene and 1-hexene, most preferably only 1-butene and 1-hexene, in the CEA, as determined according to quantitative $^{13}$C-NMR spectroscopy analysis, is 1.0 to 2.1 mol%, preferably 1.2 to 1.9 mol%. In this case, due to adjusting such a comonomer content, it is possible to provide a CEA constituting the MEC with suitable medium density and the effects of the present invention are more pronounced and/or their achievement is facilitated.

Preferably, a comonomer content of 1-butene in the ethylene copolymer fraction (B), as determined according to quantitative $^{13}$C-NMR spectroscopy analysis, is 0.4 to 1.6 mol%, preferably 0.6 to 1.2 mol%, and/or a comonomer content of 1-hexene in the ethylene copolymer fraction (B), as determined according to quantitative $^{13}$C-NMR spectroscopy analysis, is 1.2 to 2.5 mol%, preferably 1.4 to 2.3 mol%. In this case, due to adjusting such specific comonomer contents, it is possible to provide a CEA constituting the MEC with suitable medium density and the effects of the present invention are more pronounced and/or their achievement is facilitated.

The polymerization method of the multimodal ethylene copolymer composition (MEC) comprises the copolymer of ethylene and at least two $\alpha$-olefin comonomers having 3 to 10 carbon atoms (CEA) is not especially limited as long as the essential characteristics and preferably also the preferred characteristics of the MEC and the CEA and its polymer fractions as described herein are obtained.

However, the copolymer of ethylene and at least two $\alpha$-olefin comonomers having 3 to 10 carbon atoms (CEA) constituting the MEC is preferably (thus having the characteristics of) a reactor blend made in a three-stage polymerization process applying a slurry reactor 1 (SR1) - slurry reactor 2 (SR2) - gas phase reactor (GPR) cascade, such that the low molecular weight polymer fraction (A-1) is made in the SR1, the low molecular weight polymer fraction (A-2) is made in the SR2 and the high molecular weight polymer fraction (B) is made in the GPR, preferably in the presence of a Ziegler Natta catalyst system and preferably applying a prepolymerization to provide a prepolymer fraction (A-P). In this case, due to using such a more specific polymer set up, the effects of the present invention are more pronounced and/or their achievement is facilitated. A more detailed description regarding the polymerization method is given in the following.

In general, although not limited thereto, the copolymer of ethylene and at least two $\alpha$-olefin comonomers having 3 to 10 carbon atoms (CEA) constituting the multimodal ethylene copolymer composition (MEC) may be produced by a series of reactions to create an in-reactor blend of polymer fractions which results in an arrangement comprising at least low and high molecular weight polymer fractions with the high molecular weight polymer fraction being enriched in comonomer content. The CEA is preferably a reactor blend (in-reactor blend) made in a polymerization process (also referred to as polymerization method) comprising at least two, preferably at least three main polymerization stages, in the presence of a catalyst system. The catalyst system is preferably a Ziegler Natta catalyst system. The polymerization process preferably further includes a prepolymerization stage.

The polymerization by using a Ziegler Natta catalyst system may be effected in two, three or more, e.g. 2, 3, 4 or more, polymerization reactors, using conventional polymerization techniques, e.g. gas phase, solution phase, slurry or bulk polymerization. A combination of slurry (or bulk) and gas phase reactors (GPR) may be used, particularly with the reactor sequence in the order of a first slurry (or bulk) reactor (SR1), a second slurry (or bulk) reactor (SR2) and one or more, preferably only one, GPR, optionally and preferably with a prepolymerization reactor prior to the slurry (or bulk) reactor (SR1). As stated above, the prepolymerization is not considered to represent a main polymerization step of its own.

In the context of producing the multimodal ethylene copolymer composition (MEC) of the present invention, the copolymer of ethylene and at least two $\alpha$-olefin comonomers having 3 to 10 carbon atoms (CEA) is preferably produced by a process comprising the steps of:

a) Polymerizing ethylene (and optionally an $\alpha$-olefin comonomer such as 1-butene) in the presence of a Ziegler-Natta type catalyst system in a first polymerization reactor for producing a first ethylene polymer fraction (A-1), which is preferably an ethylene homopolymer fraction;

b) Transferring the polymerization mixture comprising the Ziegler-Natta type catalyst system and the first polymer fraction (A-1) from the first polymerization reactor to a second polymerization reactor;

c) Polymerizing ethylene (and optionally an $\alpha$-olefin comonomer such as 1-butene) in the presence of the Ziegler-Natta type catalyst system in the second polymerization reactor for producing a second ethylene polymer fraction (A-2), which is preferably an ethylene homopolymer fraction;

d) Transferring a polymerization mixture comprising the Ziegler-Natta type catalyst system and the first and second polymer fractions (A-1) and (A-2) from the second polymerization reactor to a third polymerization reactor;

e) Polymerizing ethylene and at least two $\alpha$-olefin comonomers having 3 to 10 carbon atoms, preferably 4 to 8 carbon atoms, more preferably at least 1-butene and 1-hexene, in the presence of the Ziegler-Natta type catalyst system in the third polymerization reactor for producing an ethylene copolymer fraction (B);

f) Withdrawing the polymerization mixture comprising the Ziegler-Natta type catalyst system, the first, second and third polymer fractions (A-1, A-2, and B) from the third polymerization reactor; and

g) Obtaining the copolymer of ethylene and at least two $\alpha$-olefin comonomers having 3 to 10 carbon atoms (CEA) comprising the first ethylene polymer fraction (A-1) and the second ethylene polymer fraction (A-2) as low molecular weight polymer fractions and the ethylene copolymer fraction (B) as high molecular weight polymer fraction being enriched in comonomer content.

Preferably, the process further comprises a prepolymerization step prior to the first polymerization step in the first polymerization reactor, wherein a mixture of the Ziegler-Natta catalyst system and a polyethylene pre(co)polymer produced in a prepolymerization reactor is obtained and subsequent to the prepolymerization, the mixture of the Ziegler-Natta catalyst system and the polyethylene pre(co)polymer produced in the prepolymerization reactor is transferred to the first polymerization reactor. That is, the main polymerization steps may preferably be preceded by the prepolymerization step. As already stated above, the purpose of the prepolymerization is to polymerize a small amount of polymer onto the catalyst at a low temperature and/or a low monomer concentration. By prepolymerization, it is possible to improve the performance of the catalyst in slurry. The prepolymerization step is preferably conducted in slurry and, as already stated above, the amount of polymer produced in a prepolymerization step is counted to the amount (wt.-%) of the polymer fraction produced in the first main polymerization reactor (e.g. A-1). It is understood that the amount of prepolymer fraction produced in the prepolymerization may be within 0.5 to 5.0 wt.-%, preferably 1.0 to 2.5 wt.-%, in respect to the total amount of the CEA.

Preferably, the first polymerization reactor is a slurry reactor (SR1) (e.g. a loop reactor), the second polymerization reactor is a slurry reactor (SR2) (e.g. a loop reactor) and the third polymerization reactor is a gas phase reactor (GPR).

The CEA is thus preferably a reactor blend made in a three-stage polymerization process applying a slurry reactor 1 (SR1) - slurry reactor 2 (SR2) - gas phase reactor (GPR) cascade, such that the low molecular weight polymer fraction (A-1) is made in the SR1, the low molecular weight polymer fraction (A-2) is made in the SR2 and the high molecular weight polymer fraction (B) is made in the GPR, preferably in the presence of a Ziegler Natta catalyst system and preferably applying a prepolymerization to provide a prepolymer fraction (A-P).

Such a process is described generally and in more detail *inter alia* in WO2020/136164 A1, EP4344869 A1, and WO2022/258804 A1 and also details of how to prepare Ziegler Natta catalysed multimodal polymers can be found in these references, especially WO2022/258804 A1. A suitable and preferred process is the Borstar® process. At least some of the polymer fractions are produced under different polymerization conditions resulting in different properties of the polymer fractions to give a multimodal polymer by having a low and high molecular weight polymer fractions.

Conditions for operating a slurry reactor (e.g. loop reactor) and a GPR and how to adjust and fine-tune final polymer properties are known to the skilled person or can be determined by orientating experimentation. Preferred operation conditions in the slurry reactor may be as follows:

- temperature within the range of 55 to 95°C, more preferably 65 to 95°C, most preferably 75 to 90°C, e.g. 85±5°C,
- pressure within the range of 30 to 75 bar, more preferably 40 to 70 bar, most preferably 45 to 65 bar, e.g. 55±5 bar,
- hydrogen can be added for controlling the molar mass in a manner known by the skilled person in the art.

Preferred operation conditions in the GPR may be as follows:

- temperature within the range of 50 to 90°C, more preferably 60 to 90°C, most preferably 70 to 85°C, e.g. 80±5°C,
- pressure within the range of 5 to 45 bar, more preferably 15 to 40 bar, e.g. 20±5 bar,
- hydrogen can be added for controlling the molar mass in a manner known by the skilled person in the art.

The CEA is preferably prepared in the presence of a Ziegler-Natta catalyst system. There exist differences between polyethylene produced by a single site catalyst such as a metallocene catalyst and a Ziegler-Natta catalyst in terms of branching, defects and uniformity of the concentrations of defects in relation to the kind of catalyst used, as well the impurity contents derived from the catalyst used. Thus, the kind of catalyst system used leads to a fingerprint in the resultant polymer and the present invention preferably uses a Ziegler-Natta catalyst system leading to the desired favorable characteristics.

Ziegler Natta catalysts are useful as they can produce polymers within a wide range of molecular weight and other desired properties with a high productivity. Ziegler Natta catalysts used in the present invention are preferably supported on an external support.

Suitable Ziegler Natta catalysts preferably contain a magnesium compound, an aluminium compound and a titanium compound supported on a particulate support.

The particulate support typically used in Ziegler-Natta catalysts comprises an inorganic oxide support, such as silica, alumina, titania, silica-alumina and silica-titania or a $MgCl_2$ based support. The catalyst used in the present invention is supported on an inorganic oxide support. Most preferably the Ziegler-Natta catalyst used in the present invention is supported on silica.

The average particle size of the silica support can be typically from 10 to 100 μm. However, it has turned out that special advantages can be obtained if the support has an average particle size from 15 to 30 μm, preferably from 18 to 25 μm. Alternatively, the support may have an average particle size of from 30 a 80 μm, preferably from 30 to 50 μm. Examples of suitable support materials are, for instance, ES747JR. produced and marketed by Ineos Silicas (former Crossfield), and SP9-491, produced and marketed by Grace.

The magnesium compound is a reaction product of a magnesium dialkyl and an alcohol. The alcohol is a linear or branched aliphatic monoalcohol. Preferably, the alcohol has from 6 to 16 carbon atoms. Branched alcohols are especially preferred, and 2-ethyl-1-hexanol is one example of the preferred alcohols. The magnesium dialkyl may be any compound of magnesium bonding to two alkyl groups, which may be the same or different. Butyl-octyl magnesium is one example of the preferred magnesium dialkyls.

The aluminium compound is chlorine containing aluminium alkyl. Especially preferred compounds are aluminium alkyl dichlorides, aluminium dialkyl chlorides and aluminium alkyl sesquichlorides.

The transition metal is preferably titanium. The titanium compound is a halogen containing titanium compound, preferably chlorine containing titanium compound. Especially preferred titanium compound is titanium tetrachloride.

The catalyst can be prepared by sequentially contacting the carrier with the above mentioned compounds, as described in EP-A-688794 or WO-A-99/51646. Alternatively, it can be prepared by first preparing a solution from the components and then contacting the solution with a carrier, as described in WO-A-01/55230.

The Ziegler Natta catalyst is used together with an activator, which is also called as cocatalyst. Suitable activators are metal alkyl compounds, typically Group 13 metal alkyl compounds, and especially aluminium alkyl compounds. They include trialkylaluminium compounds, such as trimethylaluminium, triethylaluminium, tri-isobutylaluminium, trihexylaluminium and tri-n-octylaluminium. Aluminium alkyl compounds may also include alkyl aluminium halides, such as ethylaluminium dichloride, diethylaluminium chloride, ethylaluminium sesquichloride, dimethylaluminium chloride and the like and alkylaluminium oxy-compounds, such as methylaluminiumoxane, hexaisobutylaluminiumoxane and tetraisobutylaluminiumoxane and also other aluminium alkyl compounds, such as isoprenylaluminium. Especially preferred cocatalysts are trialkylaluminiums, of which triethylaluminium, trimethylaluminium and tri-isobutylaluminium are particularly preferred.

The amount in which the activator is used depends on the specific catalyst and activator. Typically triethylaluminium is used in such amount that the molar ratio of aluminium to the transition metal, like Al/Ti, is for example from 1 to 1000, preferably from 3 to 100 and in particular from about 5 to about 30 mol/mol.

Further, the process of compounding the CEA with other components such as additive(s) is in the skilled knowledge and the MEC can for instance be obtained by mixing the CEA and other component(s) such as the additive(s) before, during or after melting the CEA, and/or the other component(s) may in the individual case be added or incorporated already during the polymerization of the CEA. For mixing, a conventional compounding or blending apparatus, such as e.g. a Banbury® mixer, a 2-roll rubber mill, Buss-co-kneader, a single screw extruder e.g. with special mixing segments or a twin screw extruder may be used. The MEC composition recovered from compounding or blending apparatus (e.g. the extruder) can be in the form of pellets or powder.

**Film**

The present invention further provides a film, which comprises or preferably consists of the multimodal ethylene copolymer composition (MEC) as described above. Preferably, at least 80.0 wt.-%, more preferably at least 90.0 wt.-%, even more preferably at least 95.0 wt.-% of the film is made of the MEC and it also possible and preferred that the film is made of, i.e. consists of the MEC. According to the desired application of the film, the film may contain additional constituents such as additives, fillers or polymers, including antioxidants, process stabilizers, slip agents, pigments, such as carbon black, ultramarine blue and titanium dioxide, UV-stabilizers and other additives known in the art.

Appropriate film forming processes for preparing the film of the present invention are commonly known to the skilled person. The film may e.g. be a packaging film for consumer goods or medical packaging.

The multimodal ethylene copolymer composition (MEC) of the invention allows the formation of films exhibiting a good mechanical and optical properties. The composition can be extruded into films according to any method known in the art. The film preparation process steps of the invention are known and may be carried out in a film line in a manner known in the art, such as flat film extrusion or blown film extrusion. Well known film lines are commercially available, for example from Windmöller & Hölscher (W&H), Reifenhauser, Hosokawa Alpine etc.

The films of the present invention may be monolayer films or the polymer composition (MEC) of the invention is used to form a layer within a multilayer film. Any film of the present invention may have a thickness of 3 to 1000 μm, preferably 5 to 500 μm, more preferably 10 to 250 μm, still more preferably 10 to 150 μm, such as e.g. 10 to 100 μm, or even 10 to 60 μm. Selected thickness is dependent on the needs of the desired end application.

The polymer compositions (MECs) of the present invention are suitable for making blown films. The films of the invention can be manufactured using simple in line addition of the polymer pellets to an extruder. For film formation using a polymer mixture it is important that the different polymer components be intimately mixed prior to extrusion and blowing of the film as otherwise there is a risk of inhomogeneity, e.g. gels, appearing in the film. Thus, it is especially preferred to thoroughly blend the components, for example using a twin screw extruder, preferably a counter-rotating extruder prior to extrusion and film blowing.

Sufficient homogeneity can also be obtained by selecting the screw design for the film extruder such that it is designed for good mixing and homogenizing. The film of the present invention is preferably a blown film.

The films of the present invention exhibit increased dart drop impact strength (toughness) without adverse effect on the tensile properties (stiffness) while other properties such as haze remain within suitably applicate ranges or are even improved.

By taking advantage of the multimodal ethylene copolymer composition (MEC) of the present invention, the present invention is able to provide a film that has a Dart Drop Impact (DDI), determined on a 40 μm blown film according to ASTM1709-16a, of 200 g or more, preferably 200 to 400 g or 240 to 400 g. In this case, the present invention achieves favorable impact strength properties in film applications and can thus be used in applications requiring a certain toughness behavior.

By taking advantage of the multimodal ethylene copolymer composition (MEC) of the present invention, the present invention is able to provide a film that has a Tensile Modulus (TM) in machine direction (MD), determined on a 40 $\mu$m blown film according to ISO 527-3, of at least 350 MPa, preferably of 350 to 750 MPa or 450 to 750 MPa. In this case, the present invention achieves favorable stiffness/bending properties and can thus be used in applications requiring a certain stiffness behavior.

By taking advantage of the multimodal ethylene copolymer composition (MEC) of the present invention, the present invention is able to provide a film that has a Tensile Modulus (TM) in traverse direction (TD), determined on a 40 $\mu$m blown film according to ISO 527-3, of at least 600 MPa, preferably 600 to 1500 MPa or 750 to 1250 MPa. In this case, the present invention achieves favorable stiffness/bending properties and can thus be used in applications requiring a certain stiffness behavior.

By taking advantage of the multimodal ethylene copolymer composition (MEC) of the present invention, the present invention is able to provide a film that has a haze, determined on a 40 $\mu$m blown film according to ASTM D1003, of 95% or less, preferably 50 to 95% or 55 to 92%. In this case, the present invention achieves favorable appearance properties and can thus be used in applications requiring a certain optical appearance.

As stated above, each of the above described film properties (e.g. DDI, TM TD, TM MD, and haze) as described herein may preferably be individually adjusted into a preferred or more preferred range, while it is even more preferred that two or more, most preferably all, of the above properties are adjusted into preferred and/or even more preferred ranges in combination.

The present invention can also provide a multilayer film, in which at least one of the layers comprises or consists of the multimodal ethylene copolymer composition (MEC) as described above. Preferably, at least 80.0 wt.-%, more preferably at least 90.0 wt.-%, more preferably at least 95.0 wt.-% of the at least one layer is made of the MEC and it also possible and preferred that the at least one layer is made of, i.e. consists of the MEC. According to the desired application of the multilayer film, the at least one layer may contain additional constituents such as additives, fillers or polymers, including antioxidants, process stabilizers, slip agents, pigments, such as carbon black, ultramarine blue and titanium dioxide, UV-stabilizers and other additives known in the art. In this case the favorable properties of the at least one layer can be combined with properties of co-layers to attain desired characteristics for individual applications.

Overall, it has surprisingly been found that the multimodal ethylene copolymer composition (MEC) according to the present invention allows for the production of films increased in the dart drop impact strength (toughness) while maintaining or even improving other mechanical properties such as the tensile properties (stiffness) while other properties such as haze remain within suitably applicate ranges or are even improved.

## 1. Measurement methods

The following methods were used to measure the properties that are defined generally above and in the examples below. Unless otherwise stated, film samples used for the measurements and definitions were prepared as described under the heading "Film Sample Preparation". Unless otherwise stated, the properties of the multimodal ethylene copolymer composition (MEC) as described herein and defined in the claims refer to a pelletized sample such as e.g. prepared as described in the Example section.

### Melt flow rate (MFR)

The melt flow rate (MFR) was determined according to ISO 1133 and is indicated in g/10 min. The MFR was determined at 190°C for polyethylene and polyethylene compositions. MFR was determined at different loadings such as 2.16 kg ($MFR_2$), 5 kg ($MFR_5$) or 21.6 kg ($MFR_{21}$). Calculation of the $MFR_2$ of a polymer fraction (e.g. B), e.g. if it cannot be measured, because it cannot be isolated from the mixture, can be done in line with the principle and systematic of the formulas in WO 2017/148970 A1 (see section "calculations"; see also Kim McAuley's equation 25 in K. K. McAuley and J. F. McGregor: On-line Inference of Polymer Properties in an Industrial Polyethylene Reactor, AIChE Journal, June 1991, Vol. 37, No, 6, pages 825-835).

### Density

The density of a polymer or polymer composition was measured according to ISO 1183-187 on compression-molded specimen prepared according to EN ISO 1872-2:2007 and is given in kg/m$^3$. Calculation of the density of a polymer fraction (e.g. B), e.g. if it cannot be measured, because it cannot be isolated from the mixture, can be done in line with the principle and systematic the Kim McAuley's equation 37 (K. K. McAuley and J. F. McGregor: On-line Inference of Polymer Properties in an Industrial Polyethylene Reactor, AIChE Journal, June 1991, Vol. 37, No, 6, pages 825-835).

**GPC (Mw, Mn, Mz, MWD)**

GPC method was used to determine the molecular weight averages (Mn, Mw and Mz) and the ratio of Mw/Mn (PDI) and the molecular weight distribution. Molecular weight averages (Mz, Mw and Mn), Molecular weight distribution (MWD) and its broadness, described by polydispersity index, PDI= Mw/Mn (wherein Mn is the number average molecular weight and Mw is the weight average molecular weight) were determined by Gel Permeation Chromatography (GPC) using the following formulas:

$$M_n = \frac{\sum_{i=1}^{N} A_i}{\sum_{i=1}^{N}(A_i/M_i)} \qquad (1)$$

$$M_w = \frac{\sum_{i=1}^{N}(A_i \times M_i)}{\sum_{i=1}^{N} A_i} \qquad (2)$$

$$M_z = \frac{\sum_{i=1}^{N}(A_i \times M_i^2)}{\sum_{i=1}^{N}(A_i \times M_i)} \qquad (3)$$

For a constant elution volume interval $\Delta V_i$, where $A_i$, and $M_i$ are the chromatographic peak slice area and polyolefin molecular weight (MW), respectively associated with the elution volume, $V_i$, where N is equal to the number of data points obtained from the chromatogram between the integration limits.

A high temperature GPC instrument, equipped with infrared (IR) detector (IR4 or IR5 from PolymerChar (Valencia, Spain), equipped with 3 x Agilent-PLgel Olexis and 1x Agilent-PLgel Olexis Guard columns was used. As the solvent and mobile phase 1,2,4-trichlorobenzene (TCB) stabilized with 250 mg/L 2,6-Di tert butyl-4-methyl-phenol) was used. The chromatographic system was operated at 160°C and at a constant flow rate of 1 mL/min. 200 μL of sample solution was injected per analysis. Data collection was performed using either Agilent Cirrus software version 3.3 or PolymerChar GPC-IR control software.

The column set was calibrated using universal calibration (according to ISO 16014-2:2003) with 19 narrow MWD polystyrene (PS) standards in the range of 0.5 kg/mol to 11 500 kg/mol. The PS standards were dissolved at room temperature over several hours. The conversion of the polystyrene peak molecular weight to polyolefin molecular weights is accomplished by using the Mark Houwink equation and the following Mark Houwink constants:

$$K_{PS} = 19 \times 10^{-3} \text{ mL/g}, \qquad \alpha_{PS} = 0.655$$

$$K_{PE} = 39 \times 10^{-3} \text{ mL/g}, \qquad \alpha_{PE} = 0.725$$

$$K_{PP} = 19 \times 10^{-3} \text{ mL/g}, \qquad \alpha_{PP} = 0.725$$

A third order polynomial fit was used to fit the calibration data.

All samples were prepared in the concentration range of 0.5 -1 mg/ml and dissolved at 160°C for 3 hours under continuous gentle shaking.

**Comonomer content - quantitative 13C-NMR spectroscopy analysis**

Quantification of microstructure by NMR spectroscopy

Quantitative nuclear-magnetic resonance (NMR) spectroscopy was used to quantify the comonomer content of the polymers.

Quantitative 13C{1H} NMR spectra recorded in the molten-state using a Bruker Avance III 500 NMR spectrometer operating at 500.13 and 125.76 MHz for 1H and 13C respectively. All spectra were recorded using a 13C optimized 7 mm magic-angle spinning (MAS) probehead at 150°C using nitrogen gas for all pneumatics. Approximately 200 mg of material was packed into a 7 mm outer diameter zirconia MAS rotor and spun at 4 kHz. This setup was chosen primarily for the high sensitivity needed for rapid identification and accurate quantification {klimke06, parkinson07, castignolles09}. Standard single-pulse excitation was employed utilizing the NOE at short recycle delays of 3 s {pollard04, klimke06} and the RS-HEPT decoupling scheme {fillip05,griffin07}. A total of 1024 (1k) transients were acquired per spectra.

Quantitative 13C{1H} NMR spectra were processed, integrated and relevant quantitative properties determined from the integrals. All chemical shifts are internally referenced to the bulk methylene signal ($\delta$+) at 30.00 ppm and assignments done according to {randall89}.

The amount of ethylene was quantified using the integral of the methylene ($\delta$+) sites at 30.00 ppm accounting for the number of reporting sites per monomer:

$$E = I\delta+ / 2$$

Characteristic signals resulting from saturated end-groups were observed. The content of such saturated end-groups was quantified using the average of the integral of the signals at 22.8 [I2S] and 32.2 ppm [I3S] assigned to the 2s and 3s sites respectively:

$$S = (1/2)*( I2S + I3S )$$

The presence of comonomer units is corrected for based on the number of comonomer units and saturated end-groups present:

$$Etotal = E + (3/2)*B + (3/2)*BB + (5/2)*BEB + (2/2)*H + (3/2)*S$$

B and H are defined for their respective comonomers. Correction for consecutive and non-consecutive commoner incorporation, when present, is undertaken in a similar way.

Characteristic signals corresponding to the incorporation of 1-butene were observed and the comonomer fraction calculated as the fraction of 1-butene in the polymer with respect to all monomer in the polymer.

The amount isolated 1-butene incorporated in EEBEE sequences was quantified using the integral of the *B2 sites at 39.9 ppm accounting for the number of reporting sites per comonomer:

$$B = I*B2$$

If present the amount consecutively incorporated 1-butene in EEBBEE sequences was quantified using the integral of the $\alpha\alpha$B2B2 site at 39.4 ppm accounting for the number of reporting sites per comonomer:

$$BB = 2 * I\alpha\alpha B2B2$$

If present the amount non consecutively incorporated 1-butene in EEBEBEE sequences was quantified using the integral of the $\beta\beta$B2B2 site at 24.8 ppm accounting for the number of reporting sites per comonomer:

$$BEB = 2 * I\beta\beta B2B2$$

Due to the overlap of the *B2 and *$\beta$B2B2 sites of isolated (EEBEE) and non-consecutively incorporated (EEBEBEE) 1-butene respectively the total amount of isolated 1-butene incorporation is corrected based on the amount of non-consecutive 1-butene present:

$$B = I*B2 - 2 * I\beta\beta B2B2$$

Sequences of BBB were not observed. The total 1-butene content was calculated based on the sum of isolated, consecutive and non consecutively incorporated 1-butene:

$$Btotal = B + BB + BEB$$

The mole fraction of 1-butene in the polymer was then calculated as:

$$fB = Btotal / ( Etotal + Btotal + Htotal)$$

Characteristic signals corresponding to the incorporation of 1-hexene were observed and the comonomer fraction calculated as the fraction of 1-hexene in the polymer with respect to all monomer in the polymer.

The amount isolated 1-hexene incorporated in EEHEE sequences was quantified using the integral of the *B4 sites at 38.3 ppm accounting for the number of reporting sites per comonomer:

$$H = I*B4$$

The total 1-hexene content was calculated from only isolated incorporated 1-hexene:

$$Htotal = H$$

The mole fraction of 1-hexene in the polymer was then calculated as:

$$fH = Htotal / ( Etotal + Btotal + Htotal)$$

The mole percent comonomer incorporation is calculated from the mole fraction:

$$B [mol\%] = 100 * fB$$

$$H [mol\%] = 100 * fH$$

The weight percent comonomer incorporation is calculated from the mole fraction:

B [wt.-%] = 100 * (fB * 56.11) / (fB * 56.11) + (fH * 84.16) + ((1 - (fB + fH)) * 28.05)) B [wt.-%] = 100 * (fH * 84.16) / (fB * 56.11) + (fH * 84.16) + ((1 - (fB + fH)) * 28.05))

Further details on the method can be found in:

J. Randall, Macromol. Sci., Rev. Macromol. Chem. Phys. 1989, C29, 201;
Klimke, K., Parkinson, M., Piel, C., Kaminsky, W., Spiess, H.W., Wilhelm, M., Macromol. Chem. Phys. 2006;207:382;
Parkinson, M., Klimke, K., Spiess, H.W., Wilhelm, M., Macromol. Chem. Phys. 2007;208:2128;
Pollard, M., Klimke, K., Graf, R., Spiess, H.W., Wilhelm, M., Sperber, O., Piel, C., Kaminsky, W., Macromolecules 2004;37:813;
Filip, X., Tripon, C., Filip, C., J. Mag. Resn. 2005, 176, 239; Griffin, J.M., Tripon, C., Samoson, A., Filip, C., and Brown, S.P., Mag. Res. in Chem. 2007 45, S1, S198;
Castignolles, P., Graf, R., Parkinson, M., Wilhelm, M., Gaborieau, M., Polymer 50 (2009) 2373.

**Dart drop strength (DDI): Impact resistance by free-falling dart method**

The DDI was measured on 40 $\mu$m blown films according to ASTM1709-16a, Method A from the test film as produced indicated below. This test method covers the determination of the energy that causes films to fail under specified conditions of impact of a free-falling dart from a specified height that would result in failure of 50 % of the specimens tested (Staircase method A). A uniform missile mass increment is employed during the test and the missile weight is decreased or increased by the uniform increment after test of each specimen, depending upon the result (failure or no failure) observed for the specimen.

*Standard conditions:*

Conditioning time: > 96 h
Test temperature: 23 °C
Dart head material: phenolic
Dart diameter: 38 mm
Drop height: 660 mm

*Results:*

Impact failure weight - 50% [g]

**Tensile modulus**

The tensile modulus (TM) (MPa) was measured in machine direction (MD) and transverse direction (TD) according to ISO 527-3 on blown film samples (prepared as described under 'Film Sample preparation') with film thickness of 40 $\mu$m and at a cross head speed of 1 mm/min for the modulus.

**Haze**

The haze was measured according to ASTM D1003-00 on blown film samples having thickness of 40 micron produced as indicated under 'Film sample preparation'.

**Film sample preparation**

The monolayer test films consisting of the inventive multimodal copolymer composition (MEC) and respective comparative polymer of 40 $\mu$m thickness, were prepared using a W&H semicommercial line. Film samples were produced with BUR 1:2.5. Melt temperature was from 255 to 260 °C and frost line distance 550-600 mm, screw speed 53-56 rpm and uptake speed 18 m/min.

**Examples**

The following Examples are included to demonstrate certain aspects and favorable embodiments of the invention as described in the claims. It should be appreciated by those of skill in the art, however, that the following description is illustrative only and should not be taken in any way as a restriction of the invention. Nevertheless, values, such as properties and conditions, disclosed in the Examples may be combined with ranges disclosed in a more general context (e.g. claims or general description) to give new (more limited or different) ranges without any limitation.

The copolymers (CEA) of inventive and comparative examples IE1, IE2 and CE were prepared in a Borstar® PE pilot unit with sequential process comprising a prepolymerization reactor, two loop reactors and a gas phase reactor (i.e. 3-main reactor set-up of loop1+loop2+GPR). A solid polymerization catalyst component produced as described in Example 1 of EP 1378528 was introduced into the prepolymerization reactor together with triethylaluminium cocatalyst so that the molar ratio of Al/Ti was about 15 as catalyst system (CAT1). The reaction conditions and the characteristics of the polymer fractions are summarized in Table 1.

The polymer compositions (MECs) of IE1, IE2 and CE were produced by mixing 99.84 wt.-% polymer powder with 0.12 wt.-% of an antioxidant blend (1:4 mixture of pentaerythritol tetrakis[3-[3,5-di-tert-butyl-4-hydroxyphenyl] propionate] (Irganox® 1010, CAS No: 6683-19-8, commercially available from BASF) and tris(2,4-di-tert-butylphenyl)phosphite (Irgafos® 168, CAS No: 31570-04-4, commercially available from BASF) and 0.04 wt.-% of acid scavenger calcium stearate (Ceasit AV-FI, CAS No: 1592-23-0, commercially available from Baerlocher) and compounding and extruding the mixture under nitrogen atmosphere to pellets by using a JSW CIMP90 twin screw extruder. The properties of the pelletized polymer compositions and the properties of the films made therefrom are shown in Table 2.

Table 1 - Production properties and characteristics of the polymer fractions

|  | IE1 | IE2 | CE |
|---|---|---|---|
| Catalyst | CAT1 | CAT1 | CAT1 |
| **Prepoly reactor** |  |  |  |
| Temp. (°C) | 70 | 70 | 70 |
| Catalyst feed (g/h) | 29.5 | 30.0 | 30.0 |
| Temp. (°C) | 70 | 70 | 70 |
| Press. (kPa) | 5582 | 5592 | 5587 |
| C2 (kg/h) | 2.0 | 2.0 | 2.0 |
| H2 (g/h) | 5.0 | 5.0 | 5.0 |
| C4 (g/h) | 101.4 | 103.6 | 105.3 |

(continued)

| Prepoly reactor | | | |
|---|---|---|---|
| Split (%) | 1.5 | 1.4 | 1.4 |
| **loop reactor 1** | | | |
| Temp. (°C) | 85 | 85 | 85 |
| Press. (kPa) | 5517 | 5517 | 5519 |
| C2 conc. (mol-%) | 3.7 | 3.2 | 3.2 |
| Diluent feed (kg/h) | 87.4 | 87.2 | 86.5 |
| H2/C2 ratio (mol/kmol) | 319.76 | 338.44 | 347.42 |
| Split (wt.-%) | 18.2 | 18.1 | 18.0 |
| MFR2 (g/10 min) | 220 to 300 | | |
| **loop reactor 2** | | | |
| Temp. (°C) | 85 | 85 | 85 |
| Press. (kPa) | 5314 | 5315 | 5312 |
| C2 conc. (mol-%) | 4.2 | 3.9 | 3.8 |
| H2/C2 ratio (mol/kmol) | 757.74 | 758.52 | 734.62 |
| Split (wt.-%) | 25.5 | 25.0 | 24.9 |
| MFR2 (g/10 min) (fraction A) | 220 to 300 | | |
| MFR2 (g/10 min) (fraction A-2) | 220 to 300 | | |
| $MFR_2(A-1)/MFR_2(A-2)$ | 0.9 to 1.2 | | |
| **GPR** | | | |
| Temp. (°C) | 80 | 80 | 80 |
| Press. (kPa) | 2000 | 2000 | 2000 |
| C2 partial Press. (kPa) | 201 | 201 | 219 |
| H2/C2 ratio (mol/kmol) | 5.39 | 17.00 | 42.17 |
| C6/C2 ratio (mol/kmol) | 47.32 | 57.66 | 61.09 |
| C4/C2 ratio (mol/kmol) | 51.80 | 62.14 | 63.98 |
| C4 (kg/h) | 1.33 | 1.50 | 1.61 |
| C6 (kg/h) | 4.00 | 4.60 | 4.86 |
| C2 (kg/h) | 58.99 | 55.00 | 55.00 |
| Split (wt.-%) | 54.8 | 55.4 | 55.8 |
| MFR2 (g/10 min) (fraction B) | 0.0001-0.0002 | 0.0002-0.0003 | 0.0007-0.0009 |
| *C2 stands for ethene, C4 for butene, C6 for hexene* | | | |

Table 2. Properties of the pelletized polymer compositions and of the films made therefrom

| | IE1 | IE2 | CE |
|---|---|---|---|
| **Pellet** | | | |
| MFR2 (g/10 min) | 0.10 | 0.11 | 0.21 |
| MFR5 (g/10 min) | 0.26 | 0.49 | 0.87 |
| MFR21 (g/10 min) | 7.25 | 13.20 | 21.30 |
| Density (kg/m3) | 939.40 | 938.80 | 940.1 |

(continued)

|  | IE1 | IE2 | CE |
|---|---|---|---|
| **Pellet** |  |  |  |
| C4 (mol%) (CEA) | 0.5 | 0.5 | 0.5 |
| C4 (mol%) (fraction B) | 0.9 | 0.9 | 0.9 |
| C6 (mol%) (CEA) | 0.9 | 1.1 | 1.0 |
| C6 (mol%) (fraction B) | 1.6 | 2.0 | 1.8 |
| Mn (g/mol) | 9655 | 9260 | 8875 |
| Mw (g/mol) | 240500 | 206500 | 177000 |
| Mz (g/mol) | 1145000 | 1002500 | 833500 |
| Mw/Mn | 24.9 | 22.3 | 19.9 |
| Mz/Mw | 4.8 | 4.9 | 4.7 |
|  |  |  |  |
| **Film** |  |  |  |
| DDI (g) | 258 | 260 | 198 |
| MD TM (MPa) | 583 | 574 | 572 |
| TD TM (MPa) | 967 | 828 | 819 |
| Haze (%) | 88 | 83 | 74 |

As apparent from the above, the main difference between the MECs of the present inventive Examples compared to the comparative Example is the final molecular weight profile and especially the final lowered MFR values, while other parameters are almost same, especially they represent MECs with given set medium density. As apparent from the above data, by adapting the molecular weight profile of the present invention and especially lowering the $MFR_{2/5/21}$ characteristics for a MEC at given set density, it is unexpectedly possible to increase in the dart drop impact strength (toughness) without adverse effect on the tensile properties (stiffness) while other properties such as the gel count and haze remain within suitably applicate ranges or are even improved. A comparison of IE1 and IE2 shows that by further lowering the $MFR_{2/5/21}$ characteristics for a MEC (IE1) at given density, it is even possible to increase the dart drop impact strength (toughness) and the tensile properties both in MD and TD (stiffness) at the same time. Based on this unexpected findings, the present invention has been completed.

## Claims

1. A multimodal ethylene copolymer composition (MEC) comprising a copolymer of ethylene and at least two $\alpha$-olefin comonomers having 3 to 10 carbon atoms (CEA) comprising low and high molecular weight polymer fractions with the high molecular weight polymer fraction being enriched in comonomer content, wherein the composition (MEC) has:

   a number average molecular weight Mn, determined by GPC according to the method in the description, in the range of 7500 to 15 000 g/mol,
   a weight average molecular weight Mw, determined by GPC according to the method in the description, in the range of 180 000 to 325 000 g/mol,
   an Mw/Mn, determined by GPC according to the method in the description, in the range of 20.0 to 30.0,
   a density, according to ISO1183-187, of 937.0 to 943.0 kg/m³,
   an $MFR_2$, according to ISO 1133 at 190°C and 2.16 kg load, of 0.01 to 0.40 g/10min,
   an $MFR_5$, according to ISO 1133 at 190°C and 5 kg load, of 0.10 to 0.70 g/10min, and
   an $MFR_{21}$, according to ISO 1133 at 190°C and 21.6 kg load, of 3.00 to 20.00 g/10min.

2. The multimodal ethylene copolymer composition (MEC) according to claim 1, wherein the composition (MEC) has at least one, preferably all of:

a Dart Drop Impact (DDI), determined on a 40 $\mu$m blown film according to ASTM1709-16a, of 200 g or more, preferably 200 to 400 g or 240 to 400 g,

a Tensile Modulus (TM) in machine direction (MD), determined on a 40 $\mu$m blown film according to ISO 527-3, of 350 MPa or more, preferably of 350 to 750 MPa or 450 to 750 MPa,

a Tensile Modulus (TM) in traverse direction (TD), determined on a 40 $\mu$m blown film according to ISO 527-3, of 600 MPa or more, preferably 600 to 1500 MPa or 750 to 1250 MPa,

a haze, determined on a 40 $\mu$m blown film according to ASTM D1003, of 95% or less, preferably 50 to 95% or 55 to 92%.

3. The multimodal ethylene copolymer composition (MEC) according to claim 1 or 2, wherein the composition (MEC) has at least one, preferably all of

a number average molecular weight Mn, determined by GPC according to the method in the description, in the range of 8000 to 12 500 g/mol, preferably 8500 to 11 500 g/mol,

a weight average molecular weight Mw, determined by GPC according to the method in the description, in the range of 185 000 to 310 000 g/mol, preferably 190 000 to 290 000 g/mol,

a z-average molecular weight Mz, determined by GPC according to the method in the description, in the range of 840 000 to 1 550 000, preferably 850 000 to 1 500 000, more preferably 900 000 to 1 400 000,

an Mw/Mn, according to the method in the description, in the range of 20.5 to 28.0, preferably 21.0 to 27.0, and

an Mz/Mw, according to the method in the description, in the range of 4.5 to 5.5, preferably 4.6 to 5.2, more preferably 4.7 to 5.1.

4. The multimodal ethylene copolymer composition (MEC) according to any one of claims 1 to 3, wherein the composition (MEC) has at least one, preferably all of

a density, according to ISO1183-187, of 937.5 to 941.0 kg/m³, preferably 938.0 to 940.5 kg/m³,

an $MFR_2$, according to ISO 1133 at 190°C and 2.16 kg load, of 0.03 to 0.30 g/10min, preferably 0.05 to 0.20 g/10min,

an $MFR_5$, according to ISO 1133 at 190°C and 5 kg load, of 0.15 to 0.65 g/10min, preferably 0.18 to 0.60 g/10min, more preferably 0.18 to 0.45 g/10min,

an $MFR_{21}$, according to ISO 1133 at 190°C and 21.6 kg load, of 4.0 to 18.0 g/10min, preferably 4.5 to 16.0 g/10min, more preferably 4.5 to 12.5 g/10min.

5. The multimodal ethylene copolymer composition (MEC) according to any one of claims 1 to 4, wherein the CEA comprises, preferably consists of, based on the total weight of the CEA:

30.0 to 60.0 wt.-%, preferably 35.0 to 55.0 wt.-%, more preferably 40.0 to 50.0 wt.-%, of an ethylene polymer fraction (A), which is a low molecular weight fraction having an $MFR_2$, according to ISO 1133 at 190°C and 2.16 kg load, of 100 to 500 g/10min or 200 to 400 g/10min, and

40.0 to 70.0 wt.-%, preferably 45.0 to 65.0 wt.-%, more preferably 50.0 to 60.0 wt.-%, of an ethylene copolymer fraction (B), which is a high molecular weight fraction having an $MFR_2$, according to ISO 1133 at 190°C and 2.16 kg load, of 0.010 g/10min or less.

6. The multimodal ethylene copolymer composition (MEC) according to any one of claims 1 to 5, wherein

the ethylene polymer fraction (A) comprises, preferably consists of, a first ethylene polymer fraction (A-1), optionally including a prepolymer fraction (A-P), and a second ethylene polymer fraction (A-2), the fractions (A-1) and (A-2) each having an $MFR_2$, according to ISO 1133 at 190°C and 2.16 kg load, of 100 to 500 g/10min, preferably 200 to 400 g/10min, such that a ratio of the MFR2 of fraction (A-1) to the $MFR_2$ of fraction (A-1) (MFR2(A-1)/$MFR_2$(A-2)) is 0.5 to 2, preferably 0.75 to 1.5, and

wherein the amount of the first ethylene polymer fraction (A-1), optionally including a prepolymer fraction (A-P), is 12.0 to 30.0 wt.-%, preferably 13.0 to 26.0 wt.-%, more preferably 15.0 to 25.0 wt.-%, based on the total weight of the CEA, and the amount of the second ethylene polymer fraction (A-2) is 15.0 to 35.0 wt.-%, preferably 18.0 to 31.0 wt.-%, more preferably 20.0 to 30.0 wt.-%, based on the total weight of the CEA.

7. The multimodal ethylene copolymer composition (MEC) according to any one of claims 1 to 6, wherein the ethylene copolymer fraction (B) is a copolymer of ethylene and at least two $\alpha$-olefin comonomers having 3 to 10 carbon atoms, preferably 1-butene and 1-hexene, the ethylene copolymer fraction (B) preferably being a terpolymer of ethylene, 1-butene and 1-hexene.

8. The multimodal ethylene copolymer composition (MEC) according to any one of claims 1 to 7, wherein an overall comonomer content of $\alpha$-olefin comonomers having 3 to 10 carbon atoms, preferably 1-butene and 1-hexene, in the CEA, as determined according to quantitative $^{13}$C-NMR spectroscopy analysis, is 1.0 to 2.1 mol%, preferably 1.2 to 1.9 mol%.

9. The multimodal ethylene copolymer composition (MEC) according to any one of claims 1 to 8, wherein

   a comonomer content of 1-butene in the ethylene copolymer fraction (B), as determined according to quantitative $^{13}$C-NMR spectroscopy analysis, is 0.4 to 1.6 mol%, preferably 0.6 to 1.2 mol%, and/or
   a comonomer content of 1-hexene in the ethylene copolymer fraction (B), as determined according to quantitative $^{13}$C-NMR spectroscopy analysis, is 1.2 to 2.5 mol%, preferably 1.4 to 2.3 mol%.

10. A film, which comprises, preferably consists of, the multimodal ethylene copolymer composition according to any one of claims 1 to 9.

11. The film according to claim 10, having a Dart Drop Impact (DDI), determined on a 40 $\mu$m blown film according to ASTM1709-16a, of 200 g or more, preferably 200 to 400 g or 240 to 400 g.

12. The film according to claim 10 or 11, having

   a Tensile Modulus (TM) in machine direction (MD), determined on a 40 $\mu$m blown film according to ISO 527-3, of 350 MPa or more, preferably 350 to 750 MPa or 450 to 750 MPa, and/or
   a Tensile Modulus (TM) in traverse direction (TD), determined on a 40 $\mu$m blown film according to ISO 527-3, is 600 MPa or more, preferably 600 to 1500 MPa or 750 to 1250 MPa.

13. The film according to any one of claims 10 to 12, having a haze, determined on a 40 $\mu$m blown film according to ASTM D1003, of 95% or less, preferably 50 to 95% or 55 to 92%.

14. Multilayer film, in which at least one of the layers comprises, preferably consists of, the multimodal ethylene copolymer composition according to any one of claims 1 to 9.

European Patent Office
Europäisches Patentamt
European Patent Office
Office européen des brevets

# EUROPEAN SEARCH REPORT

**Application Number**

EP 24 17 5449

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 3 009 457 B1 (ABU DHABI POLYMERS CO LTD BOROUGE LLC [AE]; BOREALIS AG [AT]) 21 June 2017 (2017-06-21) * page 15; table 2 * * inventive example 2 * ----- | 1-14 | INV. C08F110/02 C08F210/16 C08F2/00 C08L23/06 C08L23/0815 C08J5/18 C08L23/08 |
| A | EP 4 201 674 A1 (BOREALIS AG [AT]; ABU DHABI POLYMERS CO LTD BOROUGE LLC [AE]) 28 June 2023 (2023-06-28) * page 20; table 2 * * examples * ----- | 1-14 | |
| A | US 2023/416428 A1 (TRAN TUAN ANH [AT] ET AL) 28 December 2023 (2023-12-28) * table 1 * * examples * ----- | 1-14 | |
| A | EP 4 163 335 A1 (BOREALIS AG [AT]) 12 April 2023 (2023-04-12) * paragraph [0017] * * claims * * paragraph [0027] * * examples * ----- | 1-14 | |

**TECHNICAL FIELDS SEARCHED (IPC)**

C08F
C08L
C08J

The present search report has been drawn up for all claims

| Place of search | Date of completion of the search | Examiner |
|---|---|---|
| Munich | 14 October 2024 | Thomas, Dominik |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
...........................................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 17 5449

This annex lists the patent family members relating to the patent documents cited in the above-mentioned European search report.
The members are as contained in the European Patent Office EDP file on
The European Patent Office is in no way liable for these particulars which are merely given for the purpose of information.

14-10-2024

| Patent document cited in search report | | Publication date | Patent family member(s) | | Publication date |
|---|---|---|---|---|---|
| EP 3009457 | B1 | 21-06-2017 | CL | 2017000878 A1 | 09-02-2018 |
| | | | CN | 107108989 A | 29-08-2017 |
| | | | DK | 3009457 T3 | 31-07-2017 |
| | | | EP | 3009457 A1 | 20-04-2016 |
| | | | EP | 3207066 A1 | 23-08-2017 |
| | | | KR | 20170067822 A | 16-06-2017 |
| | | | PE | 20171539 A1 | 27-10-2017 |
| | | | WO | 2016058967 A1 | 21-04-2016 |
| EP 4201674 | A1 | 28-06-2023 | CN | 118748964 A | 08-10-2024 |
| | | | EP | 4201674 A1 | 28-06-2023 |
| | | | TW | 202339969 A | 16-10-2023 |
| | | | WO | 2023117203 A1 | 29-06-2023 |
| US 2023416428 | A1 | 28-12-2023 | CN | 116601177 A | 15-08-2023 |
| | | | EP | 4251663 A1 | 04-10-2023 |
| | | | US | 2023416428 A1 | 28-12-2023 |
| | | | WO | 2022112516 A1 | 02-06-2022 |
| EP 4163335 | A1 | 12-04-2023 | CN | 118076688 A | 24-05-2024 |
| | | | EP | 4163335 A1 | 12-04-2023 |
| | | | WO | 2023057482 A1 | 13-04-2023 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2020136164 A1
- WO 2020136166 A1
- WO 2022258804 A1
- EP 1333044 A1
- EP 3141566 A1
- EP 4344869 A1
- EP 688794 A
- WO 9951646 A
- WO 0155230 A
- WO 2017148970 A1
- EP 1378528 A

**Non-patent literature cited in the description**

- **K. K. MCAULEY** ; **J. F. MCGREGOR**. On-line Inference of Polymer Properties in an Industrial Polyethylene Reactor. *AIChE Journal*, June 1991, vol. 37 (6), 825-835
- **J. RANDALL**. *Macromol. Sci., Rev. Macromol. Chem. Phys.*, 1989, vol. C29, 201
- **KLIMKE, K.** ; **PARKINSON, M.** ; **PIEL, C.** ; **KAMINSKY, W.** ; **SPIESS, H.W.** ; **WILHELM, M.** *Macromol. Chem. Phys.*, 2006, vol. 207, 382
- **PARKINSON, M.** ; **KLIMKE, K.** ; **SPIESS, H.W.** ; **WILHELM, M.** *Macromol. Chem. Phys.*, 2007, vol. 208, 2128
- **POLLARD, M.** ; **KLIMKE, K.** ; **GRAF, R.** ; **SPIESS, H.W.** ; **WILHELM, M.** ; **SPERBER, O.** ; **PIEL, C.** ; **KAMINSKY, W.** *Macromolecules*, 2004, vol. 37, 813
- **FILIP, X.** ; **TRIPON, C.** ; **FILIP, C.** *J. Mag. Resn.*, 2005, vol. 176, 239
- **GRIFFIN, J.M.** ; **TRIPON, C.** ; **SAMOSON, A.** ; **FILIP, C.** ; **BROWN, S.P.** *Mag. Res. in Chem.*, 2007, vol. 45
- **CASTIGNOLLES, P.** ; **GRAF, R.** ; **PARKINSON, M.** ; **WILHELM, M.** ; **GABORIEAU, M.** *Polymer*, 2009, vol. 50, 2373
- *CHEMICAL ABSTRACTS*, 6683-19-8
- *CHEMICAL ABSTRACTS*, 31570-04-4
- *CHEMICAL ABSTRACTS*, 1592-23-0